# FASCICULE DE BREVET EUROPEEN

(11) **EP 3 408 522 B1**
(45) Date de publication et mention de la délivrance du brevet: **22.09.2021**
(21) Numéro de dépôt: 17706575.2
(22) Date de dépôt: 26.01.2017
(51) Int. Cl.: F02K 9/52, F02K 9/95, F23D 14/64

(54) **ÉLÉMENT D'INJECTION MUNI D'UN DISPOSITIF D'ALLUMAGE**
EINSPRITZELEMENT MIT EINER ZÜNDVORRICHTUNG
INJECTION ELEMENT HAVING AN IGNITION DEVICE

(30) Priorité: 29.01.2016 FR 1650713
(43) Date de publication de la demande: 05.12.2018
(73) Titulaire: ARIANEGROUP SAS, 75015 Paris (FR)
(72) Inventeur: LE CRAS, Jean-Luc, 27950 Saint Marcel (FR); GOMET, Laurent, 27120 Houlbec-Cocherel (FR)
(74) Mandataire: Cabinet Beau de Loménie
(86) Numéro de dépôt international: PCT/FR2017/050179
(87) Numéro de publication internationale: WO 2017/129908

(56) Documents cités:
- FR-A1- 2 269 646
- FR-A1- 2 914 368
- GB-A- 862 148
- US-A- 3 057 159
- US-A1- 2004 231 318
- US-A1- 2009 320 447

## Description

### DOMAINE DE L'INVENTION

Le présent exposé concerne un élément d'injection d'un mélange de deux ergols dans une chambre de combustion, plus particulièrement conçu pour un moteur fusée avec au moins une chambre de combustion du type comprenant un tel élément d'injection. Le présent exposé concerne plus particulièrement un perfectionnement apporté à un tel élément d'injection afin de faciliter l'allumage du mélange des ergols.

### ARRIÈRE-PLAN TECHNOLOGIQUE

La demande de brevet FR 2 974 151 A1 décrit un élément d'injection d'un mélange d'au moins un premier ergol et un deuxième ergol dans une chambre de combustion. L'élément d'injection comprend une première paroi tubulaire définissant un premier conduit pour l'injection du premier ergol, une deuxième paroi entourant la première paroi et définissant, entre les première et deuxième parois, un deuxième conduit pour l'injection du deuxième ergol.

La demande de brevet FR 2 974 151 A1 décrit des exemples de réalisation dans lesquels l'élément d'injection comprend en outre un corps central. Le corps central comprend un dispositif d'allumage du mélange, de sorte que la fonction d'allumage est intégrée à l'élément d'injection. Cependant, aucun de ces exemples n'apporte entière satisfaction du point du vue de l'optimisation de l'allumage du mélange d'ergols pour initier la combustion. L'invention vise donc à proposer un élément d'injection dans lequel l'allumage du mélange d'ergols est optimisé.

Par ailleurs, la demande de brevet FR 2 269 646 A1 décrit un injecteur de carburant. La demande de brevet GB 862 148 A1 divulgue un système d'allumage comprenant une chambre intermédiaire entre l'emplacement de dépose d'une étincelle et la chambre de combustion dans laquelle se produit le mélange du carburant et du comburant.

### PRÉSENTATION DE L'INVENTION

Ce but est atteint grâce à un élément d'injection selon la revendication 1.

La première paroi peut comprendre la première électrode en combinaison avec d'autres éléments ou former la première électrode dans son ensemble.

Grâce à cette disposition, la combustion est initiée au voisinage de la première électrode, ici au voisinage de la première paroi. Ainsi, la flamme générée peut directement s'accrocher sur la première paroi, qui se trouve à l'intersection entre le conduit de premier ergol et le conduit de deuxième ergol. La combustion est initiée dans une zone de faible vitesse des ergols et stabilisée plus rapidement ; de plus, l'énergie d'ignition étant apportée juste en amont de la zone de mélange des ergols, ceci est d'autant plus favorable à l'accroche rapide de la flamme sur la première paroi.

La première et/ou la deuxième paroi peut être cylindrique à base quelconque, notamment circulaire ou polygonale, annulaire ou tronconique.

L'élément d'injection comprend un corps central situé dans le premier conduit, la première paroi entourant le corps central. La présence d'un corps central facilite grandement la fabrication de l'élément d'injection.

Le corps central comprend une deuxième électrode pour l'allumage du mélange par décharge électrique.

La deuxième électrode forme, avec la première électrode, un système de claquage pour l'allumage du mélange d'ergols, c'est-à-dire un dispositif d'allumage par apport direct d'énergie au mélange d'ergols.

Une extrémité aval de la deuxième électrode est située en aval, dans la direction d'injection des ergols, d'une extrémité aval de la première électrode. Ainsi, l'emplacement du claquage est contrôlé avec davantage de précision. En outre, la position relative des électrodes permet de régler à souhait l'emplacement du claquage en fonction du besoin, dans la mesure où le claquage se produit le long d'un segment de droite de plus courte distance séparant les surfaces conductrices en vis-à-vis des deux électrodes.

Dans certains modes de réalisation, la première électrode est une électrode de masse. Le sens de propagation de l'étincelle de claquage est réglable par le choix de la polarisation des deux électrodes. Selon les matériaux employés, l'électrode de masse ou l'électrode chargée peuvent être alternativement plus favorables au bon accrochage de la flamme.

Dans certains modes de réalisation, une extrémité aval de la deuxième électrode, dans la direction d'injection des ergols, est plane transversalement à la direction d'injection. Sa construction est donc simplifiée. Alternativement, l'extrémité aval peut avoir toute forme configurée pour diminuer les recirculations fluides à l'extrémité aval de la deuxième électrode et ainsi augmenter la durée de vie de cette dernière.

Dans certains modes de réalisation, le premier conduit et/ou le deuxième conduit présente une forme convergente vers l'aval de l'élément d'injection.

Le présent exposé concerne également un injecteur ou tête d'injection, comprenant une pluralité d'éléments d'injection tels que précédemment décrits.

Le présent exposé concerne également une chambre de combustion comportant au moins un injecteur tel que précédemment décrit ou une pluralité d'éléments d'injection tels que précédemment décrits.

Le présent exposé concerne également un moteur-fusée comprenant au moins une chambre de combustion telle que précédemment décrite.

Dans certains modes de réalisation, le premier ergol est oxydant. Ainsi, lorsque le corps central comprend une électrode chargée formant une deuxième électrode, cette électrode est dans le courant d'oxydant et se trouve protégée de la combustion. La durée de vie du système d'allumage du moteur-fusée est donc allongée.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 une vue schématique d'un moteur fusée à ergols liquides ;
- la figure 2 est une coupe longitudinale d'un élément d'injection suivant un premier mode de réalisation ;
- la figure 3 est une coupe longitudinale partielle d'un élément d'injection suivant un premier mode de réalisation;
- la figure 4 est une coupe longitudinale partielle d'un élément d'injection suivant un exemple non revendiqué.

### DESCRIPTION DÉTAILLÉE DE L'INVENTION

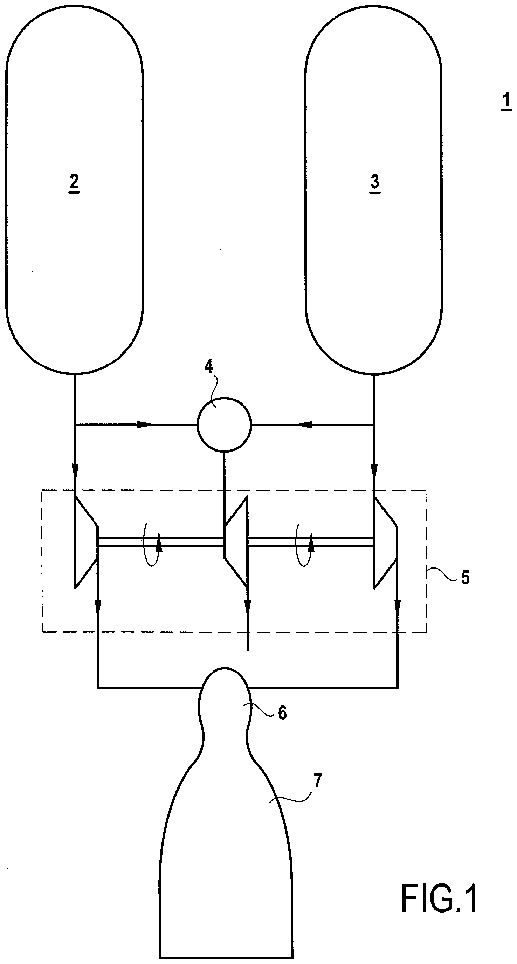

Un moteur fusée 1 à ergols liquides, en particulier à ergols liquides cryogéniques, est illustré schématiquement sur la figure 1. Ce moteur fusée 1 comporte un réservoir 2 pour le premier ergol, un réservoir 3 pour le deuxième ergol, un générateur de gaz 4 alimenté par les premier et deuxième ergols, une turbopompe 5 actionné par les gaz de combustion provenant du générateur de gaz 4, une chambre de combustion principale 6 alimentée en ergols par la turbopompe 5, et une tuyère convergente-divergente 7 pour l'éjection propulsive des gaz de combustion générés dans la chambre de combustion principale 6.

Afin d'obtenir une combustion efficace tant dans le générateur de gaz 4 que dans la chambre de combustion principale 6, ces composants comportent des organes d'injection des ergols permettant d'obtenir un mélange et une distribution homogènes des ergols. Typiquement, ces organes d'injection prennent la forme d'injecteurs comprenant une plaque d'injection dans laquelle sont distribués plusieurs éléments d'injection des deux ergols selon une configuration axi-symétrique.

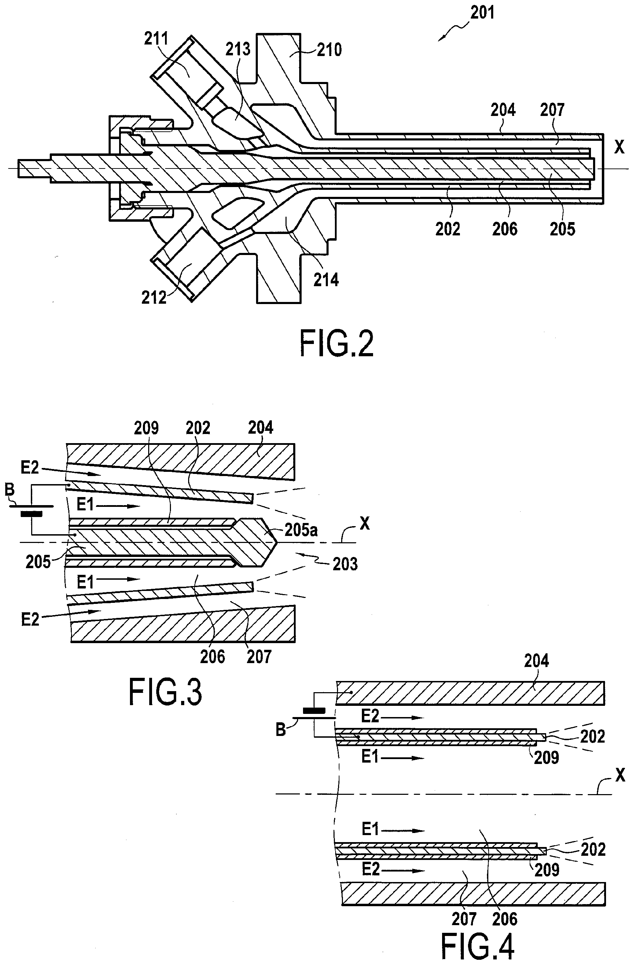

Sur la figure 2, on a représenté une coupe longitudinale d'un élément d'injection à structure coaxiale pour l'injection et le mélange de deux ergols E1, E2. Dans ce mode de réalisation, l'élément d'injection 201 est formé de plusieurs pièces, ce qui permet son démontage. Toutefois, l'élément d'injection 201 peut également être formé d'une seule pièce matériellement continue. Par exemple, l'élément d'injection 201 peut être réalisé par fabrication additive, ce qui permet la réalisation de géométries complexes et l'obtention de pièces monoblocs et matériellement continues dont le dimensionnement est optimisé. L'élément d'injection 201 peut éventuellement être matériellement continu avec l'injecteur de la chambre de combustion auquel il appartient. L'élément d'injection 201 peut présenter, comme dans le présent mode de réalisation, au moins dans sa partie aval, un axe de symétrie X, lequel est aussi l'axe principal d'écoulement des ergols E1, E2.

La figure 3 présente en détail une extrémité d'un élément d'injection selon un premier mode de réalisation. Comme illustré, l'élément d'injection 201 comprend, dans sa partie terminale, deux parois 202, 204 coaxiales autour d'un corps central 203 de manière à former un premier et un deuxième conduits 206, 207.

Dans ce mode de réalisation, la première paroi 202 est tronconique. La deuxième paroi 204 est délimitée par une surface radialement interne tronconique et une surface radialement externe cylindrique. Selon une variante, la deuxième paroi 204 peut être délimitée par deux surfaces tronconiques. Le premier conduit 206 et le deuxième conduit 207 présentent une forme convergente vers l'aval de l'élément d'injection 201. Ainsi, l'architecture de l'élément d'injection 201 est rendue compacte au voisinage de son extrémité à laquelle a lieu le claquage et la génération d'étincelle. De cette façon, l'intégration de l'élément d'injection sur une tête d'injection comprenant plusieurs éléments d'injection est facilitée.

Le corps central 203 comprend une âme conductrice 205 entouré d'une gaine isolante 209. Une extrémité 205a de l'âme 205 fait saillie à l'extrémité de la gaine 209. L'extrémité 205a comporte une partie distale de forme sensiblement conique. L'extrémité 205a est ainsi configurée pour diminuer les recirculations dans le sillage de l'électrode, ce qui augmente sa durée de vie.

Un retrait peut être défini entre l'extrémité de l'enveloppe externe, c'est-à-dire la deuxième paroi (paroi externe) 204, et la première paroi 202 (paroi interne). La deuxième paroi 204 peut faire partie de la plaque d'injection 210 (ici partiellement représentée) elle-même.

L'élément d'injection 201 comprend en outre une alimentation en premier ergol 211 et une alimentation en deuxième ergol 212, débouchant respectivement dans des première et deuxième cavités 213, 214, ici annulaires, aptes à alimenter respectivement les premier et deuxième conduits 206, 207.

Le premier conduit 206 est configuré pour l'injection du premier ergol E1, tandis que le deuxième conduit 207, radialement adjacent à l'extérieur du premier conduit 206, est configuré pour l'injection du deuxième ergol E2. Le premier et le deuxième ergols E1, E2 étant injectés à des vitesses différentes lors du fonctionnement de l'élément d'injection 201, le cisaillement à l'intérieur du flux du deuxième ergol E2 dans le retrait produit des turbulences dans les flux des deux ergols E1, E2, assurant un mélange homogène des deux ergols E1, E2.

L'allumage de l'élément d'injection 201 va maintenant être détaillé en référence à la figure 3, qui présente en détail la zone d'allumage de l'élément d'injection 201.

Comme indiqué précédemment, la première paroi 202 comprend une première électrode pour l'allumage du mélange par décharge électrique. Dans le mode de réalisation de la figure 3, le corps central 203 comprend une deuxième électrode pour l'allumage du mélange par décharge électrique. Les première et deuxième électrodes sont connectées à des pôles opposés d'une source électrique B de manière à générer une décharge électrique afin d'apporter directement une énergie d'allumage à ce mélange et provoquer son ignition. On comprend, compte tenu de la configuration de la première paroi 202 et du corps central 205, que la décharge électrique est générée entre le corps central 205, plus particulièrement son extrémité aval 205a, et l'extrémité aval de la première électrode, ici l'extrémité aval de la première paroi 202. Ainsi, la première électrode, la deuxième électrode et la source électrique B forment un dispositif d'allumage du mélange d'ergols par apport direct d'énergie, ici une étincelle. Grâce au fait que la première paroi 202 comprend une électrode, ici l'électrode de masse, l'énergie de l'étincelle est déposée dans le sillage de la première paroi 202. Plus précisément, comme expliqué précédemment, l'étincelle, ou décharge électrique, est générée juste en amont de la zone de mélange entre le premier ergol et le deuxième ergol, donc dans le premier ergol, et l'énergie apportée par cette étincelle se dépose directement dans ladite zone de mélange, qui se trouve, comme on peut le voir sur la figure 3, dans le sillage de la première paroi 202. Cette énergie sublime une partie du matériau de la première paroi 202, ce qui crée un plasma et des radicaux précurseurs de la combustion dans la zone de mélange des ergols. Par conséquent, l'énergie libérée par le dispositif d'allumage est déposée directement dans une zone de mélange des deux ergols E1, E2, fortement turbulente et ayant une vitesse globale relativement faible dans la direction X, ce qui améliore sensiblement la stabilité et l'accrochage de la flamme pour l'ignition du mélange. En d'autres termes et comme on le comprend de la figure 3, la flamme résultant de l'allumage du mélange d'ergols s'accroche sur l'extrémité aval de la première paroi 202, aussi appelée lèvre et qui correspond, dans ce mode de réalisation, à l'extrémité aval de la première électrode.

Ainsi, pour déclencher le fonctionnement d'une chambre de combustion comportant un injecteur avec une pluralité d'éléments d'injection dont au moins un élément d'injection 201 tel que celui illustré sur les figures 2 et 3, on commence par injecter lesdits premier et deuxième ergols E1, E2 dans la chambre de combustion, le premier ergol E1 étant injecté à travers le premier conduit 206 et le deuxième ergol E2 étant injecté à travers le deuxième conduit 207. En aval des conduits 206, 207, lesdits premier et deuxième ergols se mélangent par des turbulences entre les deux ergols E1, E2. Pour allumer ce mélange, la source électrique B est activée, créant ainsi une étincelle énergisant ce mélange et provoquant son ignition. Une fois le mélange d'ergols allumé, la tension électrique entre la première électrode de la première paroi 202 et la deuxième électrode du corps central 203 peut être annulée, ce par quoi l'élément d'injection 201 remplit uniquement sa fonction d'injection. L'allumage de la chambre entière se fait ensuite par interaction entre la flamme de l'élément d'injection 201 et les autres injecteurs, de la même manière que pour un allumeur classique.

Le premier ergol E1 peut être un ergol oxydant, ce qui protège l'électrode chargée comprise dans le corps central 203 une fois le mélange d'ergols allumé et la combustion initiée. Dans une autre utilisation, le premier ergol E1 peut être un ergol réducteur. L'électrode serait également protégée. Le premier ergol E1 peut être choisi comme l'ergol le plus dense parmi les deux ergols utilisés, ce qui assure un écoulement plus stable et un meilleur mélange.

La figure 4 présente une partie aval de l'élément d'injection 201 selon un autre exemple, non revendiqué, pour une meilleure compréhension de l'invention. Dans cet exemple, l'élément d'injection ne comprend pas de corps central. Toutefois, pour faciliter la fabrication de l'élément d'injection 201, l'élément d'injection 201 pourrait comprendre un corps central, éventuellement électriquement inactif vis-à-vis du dispositif d'allumage.

La deuxième paroi 204 comprend une deuxième électrode, ici une électrode chargée, pour l'allumage du mélange par décharge électrique. La source électrique B est connectée entre les première et deuxième électrodes des première et deuxième parois 202, 204. La première électrode de la première paroi 202 est protégée sur sensiblement toute sa longueur par une gaine isolante 209. L'extrémité aval de la première électrode de la première paroi 202 fait saillie de la gaine 209 afin de permettre le claquage avec la deuxième électrode de la deuxième paroi 204. Le fonctionnement de l'élément d'injection selon cet exemple est similaire à celui décrit précédemment.

En outre, comme les premier et deuxième conduits 206, 207 sont ici annulaires, le dimensionnement de l'élément d'injection 201 peut facilement être adapté au débit total d'ergols requis.

Bien que les modes de réalisation précédents concernent des éléments d'injection coaxiaux, le même concept peut aussi être appliqué à des éléments d'injection tri-coaxiaux. Ainsi, selon une variante non représentée, l'élément d'injection 201 peut comprendre, au moins dans sa partie terminale, trois parois coaxiales autour ou non d'un corps central 203, de manière à former trois conduits coaxiaux. Selon une possibilité, un même ergol peut circuler dans le conduit radialement le plus interne et le conduit radialement le plus externe, tandis qu'un autre ergol circule dans le conduit intermédiaire.

Selon cette variante, la première paroi comprenant la première électrode peut être choisie parmi les deux parois qui sont les plus proches de l'axe de l'élément injection, c'est-à-dire les deux parois radialement les plus internes, c'est-à-dire encore les deux parois qui sont à la frontière entre deux conduits.

Un élément d'injection selon l'un quelconque des modes de réalisation précédemment décrits peut être utilisé dans une chambre de combustion tel qu'une chambre de combustion principale, un générateur de gaz ou une chambre de pré-combustion, aussi appelée pré-chambre.

Bien que la présente invention ait été décrite en se référant à des exemples de réalisation spécifiques, des modifications peuvent être apportées à ces exemples sans sortir de la portée générale de l'invention telle que définie par les revendications. Par conséquent, la description et les dessins doivent être considérés dans un sens illustratif plutôt que restrictif.

## Revendications

1. Élément d'injection (201) d'un mélange d'au moins un premier ergol (E1) et un deuxième ergol (E2) dans une chambre de combustion (6), l'élément d'injection (201) comprenant une première paroi (202) tubulaire définissant un premier conduit (206) pour l'injection du premier ergol (E1), un corps central (203) situé dans le premier conduit (206), la première paroi (202) entourant le corps central (203), et une deuxième paroi (204) entourant la première paroi (202) et définissant, entre les première et deuxième parois, un deuxième conduit (207) pour l'injection du deuxième ergol (E2), dans lequel la première paroi (202) comprend une première électrode et le corps central (203) comprend une deuxième électrode pour l'allumage du mélange par décharge électrique, la première électrode et la deuxième électrode étant configurées pour générer une décharge électrique juste en amont de la zone de mélange du premier ergol et du deuxième ergol, et dans lequel une extrémité aval de la deuxième électrode est située en aval, dans la direction d'injection des ergols, d'une extrémité aval de la première électrode.

2. Élément d'injection selon la revendication 1, dans lequel la première électrode est une électrode de masse.

3. Élément d'injection selon la revendication 1 ou 2, dans lequel une extrémité aval de la deuxième électrode, dans la direction d'injection des ergols, est plane transversalement à la direction d'injection.

4. Élément d'injection selon l'une quelconque des revendications 1 à 3, dans lequel le premier conduit (206) et/ou le deuxième conduit (207) présente une forme convergente vers l'aval de l'élément d'injection (201).

5. Injecteur comprenant une pluralité d'éléments d'injection selon l'une quelconque des revendications 1 à 4.

6. Chambre de combustion (6) comportant au moins un élément d'injection selon l'une quelconque des revendications 1 à 4.

7. Moteur-fusée (1) comprenant au moins une chambre de combustion (6) selon la revendication 6.

## Patentansprüche

1. Element (201) zur Einspritzung eines Gemischs aus mindestens einem ersten Raketentreibstoff (E1) und einem zweiten Raketentreibstoff (E2) in eine Brennkammer (6), wobei das Einspritzelement (201) eine erste rohrförmige Wand (202), die eine erste Leitung (206) für die Einspritzung des ersten Raketentreibstoffs (E1) definiert, einen mittleren Körper (203), der sich in der ersten Leitung (206) befindet, wobei die erste Wand (202) den mittleren Körper (203) umgibt, und eine zweite Wand (204) umfasst, die die erste Wand (202) umgibt und zwischen der ersten und zweiten Wand eine zweite Leitung (207) für die Einspritzung des zweiten Raketentreibstoffs (E2) definiert, wobei die erste Wand (202) eine erste Elektrode umfasst und der mittlere Körper (203) eine zweite Elektrode zur Zündung des Gemischs durch elektrische Entladung umfasst, wobei die erste Elektrode und die zweite Elektrode dazu ausgestaltet sind, unmittelbar stromaufwärts der Zone zur Mischung des ersten Raketentreibstoffs und des zweiten Raketentreibstoffs eine elektrische Entladung zu erzeugen, und wobei ein stromabwärtiges Ende der zweiten Elektrode sich in der Richtung der Einspritzung der Raketentreibstoffe stromabwärts eines stromabwärtigen Endes der ersten Elektrode befindet.

2. Einspritzelement nach Anspruch 1, wobei die erste Elektrode eine Masseelektrode ist.

3. Einspritzelement nach Anspruch 1 oder 2, wobei ein stromabwärtiges Ende der zweiten Elektrode in der Richtung der Einspritzung der Raketentreibstoffe quer zur Einspritzrichtung eben ist.

4. Einspritzelement nach einem der Ansprüche 1 bis 3, wobei die erste Leitung (206) und/oder die zweite Leitung (207) eine hin zur stromabwärtigen Seite des Einspritzelements (201) zusammenlaufende Form aufweisen bzw. aufweist.

5. Einspritzdüse, die mehrere Einspritzelemente nach einem der Ansprüche 1 bis 4 umfasst.

6. Brennkammer (6), die mindestens ein Einspritzelement nach einem der Ansprüche 1 bis 4 beinhaltet.

7. Raketentriebwerk (1), das mindestens eine Brennkammer (6) nach Anspruch 6 umfasst.

## Claims

1. An injector element (201) for injecting a mixture of at least a first propellant (E1) and a second propellant (E2) into a combustion chamber (6), the injector element (201) comprising a first tubular wall (202) defining a first duct (206) for injecting the first propellant (E1), a central body (203) situated in the first duct (206), the first wall (202) surrounding the central body (203), and a second wall (204) surrounding the first wall (202) and defining, between the first and second walls, a second duct (207) for injecting the second propellant (E2), wherein the first wall (202) comprises a first electrode and the central body (203) comprises a second electrode for igniting the mixture by electric discharge, the first electrode and the second electrode being configured to generate an electric discharge immediately upstream from the zone where the first propellant and the second propellant mix together, and wherein a downstream end of the second electrode is situated downstream in the propellant injection direction from a downstream end of the first electrode.

2. An injector element according to claim 1, wherein the first electrode is a ground electrode.

3. An injector element according to claim 1 or 2, wherein an end of the second electrode that is downstream in the propellant injection direction is plane transversely to the injection direction.

4. An injector element according to any one of claims 1 to 3, wherein the first duct (206) and/or the second duct (207) present a shape converging towards downstream from the injector element (201).

5. An injector comprising a plurality of injector elements according to any one of claims 1 to 4.

6. A combustion chamber (6) including at least one injector element according to any one of claims 1 to 4.

7. A rocket engine (1) comprising at least one combustion chamber (6) according to claim 6.
